(19)

**Europäisches Patentamt**

**European Patent Office**

**Office européen des brevets**

(11) **EP 4 716 296 A1**

(12) **EUROPEAN PATENT APPLICATION**

(43) Date of publication:
25.03.2026 Bulletin 2026/13

(21) Application number: 25200387.6

(22) Date of filing: 05.09.2025

(51) International Patent Classification (IPC):
*H04W 28/24* (2009.01)     *H04W 28/02* (2009.01)

(52) Cooperative Patent Classification (CPC):
H04W 28/24; H04W 28/0268

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.09.2024 FI 20246151**

(71) Applicant: **Nokia Solutions and Networks Oy
02610 Espoo (FI)**

(72) Inventors:
• **KHOSRAVIRAD, Saeed Reza
Mountainside (US)**
• **LIETO, Alessandro
Stuttgart (DE)**

(74) Representative: **Nokia EPO representatives
Nokia Technologies Oy
Karakaari 7
02610 Espoo (FI)**

(54) **METHODS OF QUALITY OF SERVICE ADJUSTMENTS FOR INDUSTRIAL WIRELESS CONTROL**

(57)     In a system, apparatus, method, and non-transitory computer readable medium, a network device may be caused to, obtain task utility information for at least one task to be performed by at least one wirelessly controlled device, obtain wireless link utility information for at least one wireless link to be assigned to the at least one task, determine a QoS time function for the at least one task and the at least one wireless link based on the task utility information and the wireless link utility information, and communicate the QoS time function to a network scheduler node, a core network node, and an enterprise management server, the QoS time function enabling the network scheduler node to provide network resources over the first time period to the at least one wirelessly controlled device based on the QoS requirements.

FIG. 1

## Description

BACKGROUND

*Field*

Various example embodiments relate to methods, apparatuses, systems, and/or non-transitory computer readable media for providing quality of service (QoS) adjustments for industrial wireless control systems.

*Description of the Related Art*

A 5th generation mobile network (5G) standard, referred to as 5G New Radio (NR), is being developed to provide higher capacity, higher reliability, and lower latency communications than the 4G long term evolution (LTE) standard.

With the deployment of 5th generation mobile network (5G) networks and other high-speed networks, there has been increased proliferation of network-enabled devices and/or applications, such as autonomous vehicles, robots, Internet of Things (IoT) devices, industrial sensors, network-enabled medical devices, etc., which have been adapted to take advantage of the higher capacity, higher reliability, and lower latency communications service.

One proposed implementation of 5G network capabilities is related to the field of cloud robotics and/or industrial wireless control, where the controller and/or control system of a robotics system is located in a cloud network (e.g., a private network, a Wide Area Network (WAN), a core network, the Internet, etc.) and provides control instructions to a wirelessly controlled device, e.g., a robot, actuators, an autonomous ground vehicle (AGV), an unmanned aerial vehicle (UAV), sensors, etc.

SUMMARY

At least one example embodiment relates to a network device.

In at least one example embodiment, the network device may include a memory storing computer readable instructions, and processing circuitry configured to execute the computer readable instructions to cause the network device to, obtain task utility information for at least one task to be performed by at least one wirelessly controlled device, obtain wireless link utility information for at least one wireless link to be assigned to the at least one task, determine a quality of service (QoS) time function for the at least one task and the at least one wireless link based on the task utility information and the wireless link utility information, the QoS time function establishing QoS requirements over a first time period for the at least one task and the at least one wireless link, and communicate the QoS time function to a network scheduler node, a core network node, and an enterprise management server, the QoS time function enabling the network scheduler node to provide network resources over the first time period to the at least one wirelessly controlled device based on the QoS requirements.

Some example embodiments provide that in response to the communicating the QoS time function, the network device is further caused to, receive QoS assignment information for the at least one wireless link from the core network node.

Some example embodiments provide that the task utility information includes at least one of, at least one estimated total operation time of the at least one task, at least one estimated time to completion of the at least one task, at least one estimated sampling time of the at least one task, at least one estimated survival time of the at least one task, at least one operation status of the at least one task, at least one sensor value associated with the at least one task from the at least wirelessly controlled device, or any combinations thereof, the wireless link utility information includes at least one of, available network resource information, channel status information, network load information, estimated future network load information, or any combinations thereof, and the task utility information and the wireless link utility information vary over the first time period.

Some example embodiments provide that the network device is further caused to, calculate $O(t)^\beta \times U(t)^\gamma$, where $O(t)$ is the task utility information over time, $U(t)$ is the wireless link utility information over time, $\beta$ is a task priority weight, and $\gamma$ is a link priority weight, and set a set of traffic priority metrics for each task and wireless link combination of the at least one task to be performed and the at least one wireless link based on results of the calculation.

Some example embodiments provide that the network device is further caused to determine the QoS time function by, negotiating a set of QoS requirement alternatives for the at least one task and the at least one wireless link with the network scheduler node, negotiating a set of time varying preference metrics corresponding to the QoS requirement alternatives with the network scheduler node, and determining the QoS time function based on the set of QoS requirement alternatives and the set of time varying preference metrics.

Some example embodiments provide that the network device is further caused to, receive a QoS range renegotiation request from the network scheduler node based on changes in network load detected by the network scheduler node, and re-negotiate the set of QoS requirement alternatives for the at least one task and the at least one wireless link with the network scheduler node and the set of time varying preference metrics corresponding to the QoS requirement alternatives with the network scheduler node in response to the QoS range renegotiation request.

Some example embodiments provide that the network device is further caused to, detect changes in the QoS requirements of the QoS time function, transmit a QoS range renegotiation request to the network scheduler node based on the changes in the QoS requirements, and re-negotiate the set of QoS requirement alternatives for the at least one task and the at least one wireless link with the network scheduler node and the set of time varying preference metrics corresponding to the QoS requirement alternatives with the network scheduler node in response to the QoS range renegotiation request.

Some example embodiments provide that the network device is further caused to, obtain updated task utility information for the at least one task to be performed by the at least one wirelessly controlled device, obtain updated wireless link utility information for at least one wireless link to be assigned to the at least one task, determine an updated QoS time function for the at least one task and the at least one wireless link based on the updated task utility information and the updated wireless link utility information, the updated QoS time function establishing updated QoS requirements over a second time period for the at least one task and the at least one wireless link, and communicate the updated QoS time function to the network scheduler node, the updated QoS time function enabling the network scheduler node to provide updated network resources over the second time period to the at least one wirelessly controlled device based on the updated QoS requirements.

Some example embodiments provide that the network device is further caused to, receive a QoS update request from the network scheduler node based on changes in network load detected by the network scheduler node, and determine the updated wireless link utility information for the at least one wireless link to be assigned to the at least one task to be performed by the at least one wirelessly controlled device in response to the QoS update request.

Some example embodiments provide that the network device is further caused to, detect change in the QoS requirements of the QoS time function, transmit a QoS update request to the network scheduler node in response to the detected changes in the QoS requirements exceeding a desired threshold, and determine the updated wireless link utility information for the at least one wireless link to be assigned to the at least one task to be performed by the at least one wirelessly controlled device in response to the QoS update request.

Some example embodiments provide that the network device is further caused to, detect change in the QoS requirements of the QoS time function, transmit a QoS update request to the network scheduler node in response to the detected changes in the QoS requirements at a desired time interval, and determine the updated wireless link utility information for the at least one wireless link to be assigned to the at least one task to be performed by the at least one wirelessly controlled device in response to the QoS update request.

Some example embodiments provide that the network device is further caused to, determine task utility recommendations for the at least one task to be performed by the at least one wirelessly controlled device based on the QoS time function, and transmit the task utility recommendations to the at least one wirelessly controlled device, the determined task utility recommendations enabling the at least one wirelessly controlled device to update the task utility information for the at least one task.

At least one example embodiment relates to a radio access network (RAN) node.

In at least one example embodiment, the RAN node may include a memory storing computer readable instructions, and processing circuitry configured to execute the computer readable instructions to cause the RAN node to, determine wireless link utility information for at least one wireless link to be assigned to at least one task to be performed by at least one wirelessly controlled device, transmit the wireless link utility information to a co-design interface server, obtain a Quality of Service (QoS) value from a core network node for the at least one wireless link, the QoS value establishing QoS requirements over a first time period for the at least one wireless link, determine scheduling metrics for the at least one wireless link based on the QoS value, and provide network resources over the first time period to the at least one wirelessly controlled device based on the scheduling metrics.

Some example embodiments provide that the wireless link utility information includes at least one of, available network resource information, channel status information, network load information, estimated future network load information, or any combinations thereof, and the wireless link utility information and the scheduling metrics vary over the first time period.

Some example embodiments provide that the RAN node is further caused to, negotiate a set of QoS requirement alternatives for the at least one wireless link with the co-design interface server, and negotiate a set of time varying preference metrics corresponding to the QoS requirement alternatives with the co-design interface server.

Some example embodiments provide that the RAN node is further caused to, receive a QoS range renegotiation request from the co-design interface server, and re-negotiate the set of QoS requirement alternatives for the at least one wireless link with the co-design interface server and the set of time varying preference metrics corresponding to the QoS requirement alternatives with the co-design interface server in response to the QoS range renegotiation request.

Some example embodiments provide that the RAN node is further caused to, detect changes in network load, transmit a QoS range renegotiation request to the co-design interface server based on the changes in the network load, and re-negotiate the set of QoS requirement alternatives for the at least one wireless link with the co-design interface server and the set of time varying preference metrics corresponding to the QoS requirement alternatives with the co-design interface server in response to the QoS range renegotiation request.

Some example embodiments provide that the RAN node is further caused to, determine updated wireless link utility information for the at least one wireless link to be assigned to the at least one task to be performed by the at least one wirelessly controlled device, transmit the updated wireless link utility information to the co-design interface server, obtain an updated QoS value for the at least one wireless link, the updated QoS value establishing updated QoS requirements over a second time period for the at least one wireless link, determine updated scheduling metrics for the at least one task based on the updated QoS value, and provide updated network resources over the second time period to the at least one wirelessly controlled device based on the updated scheduling metrics.

Some example embodiments provide that the RAN node is further caused to, receive a QoS update request from the co-design interface server, and determine the updated wireless link utility information for the at least one wireless link to be assigned to the at least one task to be performed by the at least one wirelessly controlled device in response to the QoS update request.

Some example embodiments provide that the RAN node is further caused to, detect changes in network load, transmit a QoS update request to the co-design interface server in response to the detected changes in the network load, and determine the updated wireless link utility information for the at least one wireless link to be assigned to the at least one task to be performed by the at least one wirelessly controlled device in response to the QoS update request.

At least one example embodiment relates to a method of operating a network device.

In at least one example embodiment, the method may include obtaining task utility information for at least one task to be performed by at least one wirelessly controlled device, obtaining wireless link utility information for at least one wireless link to be assigned to the at least one task, determining a quality of service (QoS) time function for the at least one task and the at least one wireless link based on the task utility information and the wireless link utility information, the QoS time function establishing QoS requirements over a first time period for the at least one task and the at least one wireless link, and communicating the QoS time function to a network scheduler node, a core network node, and an enterprise management server, the QoS time function enabling the network scheduler node to provide network resources over the first time period to the at least one wirelessly controlled device based on the QoS requirements.

At least one example embodiment relates to a network device.

In at least one example embodiment, the network device may include means for obtaining task utility information for at least one task to be performed by at least one wirelessly controlled device, obtaining wireless link utility information for at least one wireless link to be assigned to the at least one task, determining a quality of service (QoS) time function for the at least one task and the at least one wireless link based on the task utility information and the wireless link utility information, the QoS time function establishing QoS requirements over a first time period for the at least one task and the at least one wireless link, and communicating the QoS time function to a network scheduler node, a core network node, and an enterprise management server, the QoS time function enabling the network scheduler node to provide network resources over the first time period to the at least one wirelessly controlled device based on the QoS requirements.

Some example embodiments provide that the network device further includes means for, receiving QoS assignment information for the at least one wireless link from the core network node in response to the communicating the QoS time function.

Some example embodiments provide that the task utility information includes at least one of, at least one estimated total operation time of the at least one task, at least one estimated time to completion of the at least one task, at least one estimated sampling time of the at least one task, at least one estimated survival time of the at least one task, at least one operation status of the at least one task, at least one sensor value associated with the at least one task from the at least wirelessly controlled device, or any combinations thereof, the wireless link utility information includes at least one of, available network resource information, channel status information, network load information, estimated future network load information, or any combinations thereof, and the task utility information and the wireless link utility information vary over the first time period.

Some example embodiments provide that the network device further includes means for, calculating $O(t)^{\beta} \times U(t)^{\gamma}$, where O(t) is the task utility information over time, U(t) is the wireless link utility information over time, $\beta$ is a task priority weight, and $\gamma$ is a link priority weight, and setting a set of traffic priority metrics for each task and wireless link combination of the at least one task to be performed and the at least one wireless link based on results of the calculation.

Some example embodiments provide that the network device further includes means for determining the QoS time function by, negotiating a set of QoS requirement alternatives for the at least one task and the at least one wireless link with the network scheduler node, negotiating a set of time varying preference metrics corresponding to the QoS requirement alternatives with the network scheduler node, and determining the QoS time function based on the set of QoS requirement alternatives and the set of time varying preference metrics.

Some example embodiments provide that the network device further includes means for, receiving a QoS range renegotiation request from the network scheduler node based on changes in network load detected by the network scheduler node, and re-negotiating the set of QoS requirement alternatives for the at least one task and the at least one wireless link with the network scheduler node and the set of time varying preference metrics corresponding to the QoS requirement alternatives with the network scheduler node in response to the QoS range renegotiation request.

Some example embodiments provide that the network device further includes means for, detecting changes in the QoS requirements of the QoS time function, transmitting a QoS range renegotiation request to the network scheduler node based on the changes in the QoS requirements, and re-negotiating the set of QoS requirement alternatives for the at least one task and the at least one wireless link with the network scheduler node and the set of time varying preference metrics corresponding to the QoS requirement alternatives with the network scheduler node in response to the QoS range renegotiation request.

Some example embodiments provide that the network device further includes means for, obtaining updated task utility information for the at least one task to be performed by the at least one wirelessly controlled device, obtaining updated wireless link utility information for at least one wireless link to be assigned to the at least one task, determining an updated QoS time function for the at least one task and the at least one wireless link based on the updated task utility information and the updated wireless link utility information, the updated QoS time function establishing updated QoS requirements over a second time period for the at least one task and the at least one wireless link, and communicating the updated QoS time function to the network scheduler node, the updated QoS time function enabling the network scheduler node to provide updated network resources over the second time period to the at least one wirelessly controlled device based on the updated QoS requirements.

Some example embodiments provide that the network device further includes means for, receiving a QoS update request from the network scheduler node based on changes in network load detected by the network scheduler node, and determining the updated wireless link utility information for the at least one wireless link to be assigned to the at least one task to be performed by the at least one wirelessly controlled device in response to the QoS update request.

Some example embodiments provide that the network device further includes means for, detecting change in the QoS requirements of the QoS time function, transmitting a QoS update request to the network scheduler node in response to the detected changes in the QoS requirements exceeding a desired threshold, and determining the updated wireless link utility information for the at least one wireless link to be assigned to the at least one task to be performed by the at least one wirelessly controlled device in response to the QoS update request.

Some example embodiments provide that the network device further includes means for, detecting change in the QoS requirements of the QoS time function, transmitting a QoS update request to the network scheduler node in response to the detected changes in the QoS requirements at a desired time interval, and determining the updated wireless link utility information for the at least one wireless link to be assigned to the at least one task to be performed by the at least one wirelessly controlled device in response to the QoS update request.

Some example embodiments provide that the network device further includes means for, determining task utility recommendations for the at least one task to be performed by the at least one wirelessly controlled device based on the QoS time function, and transmitting the task utility recommendations to the at least one wirelessly controlled device, the determined task utility recommendations enabling the at least one wirelessly controlled device to update the task utility information for the at least one task.

At least one example embodiment relates to a radio access network (RAN) node.

In at least one example embodiment, the RAN node may include means for, determining wireless link utility information for at least one wireless link to be assigned to at least one task to be performed by at least one wirelessly controlled device, transmitting the wireless link utility information to a co-design interface server, obtaining a Quality of Service (QoS) value from a core network node for the at least one wireless link, the QoS value establishing QoS requirements over a first time period for the at least one wireless link, determining scheduling metrics for the at least one wireless link based on the QoS value, and providing network resources over the first time period to the at least one wirelessly controlled device based on the scheduling metrics.

Some example embodiments provide that the wireless link utility information includes at least one of, available network resource information, channel status information, network load information, estimated future network load information, or any combinations thereof, and the wireless link utility information and the scheduling metrics vary over the first time period.

Some example embodiments provide that the RAN node further includes means for, negotiating a set of QoS requirement alternatives for the at least one wireless link with the co-design interface server, and negotiating a set of time varying preference metrics corresponding to the QoS requirement alternatives with the co-design interface server.

Some example embodiments provide that the RAN node further includes means for, receiving a QoS range renegotiation request from the co-design interface server, and re-negotiating the set of QoS requirement alternatives for the at least one wireless link with the co-design interface server and the set of time varying preference metrics corresponding to the QoS requirement alternatives with the co-design interface server in response to the QoS range renegotiation request.

Some example embodiments provide that the RAN node further includes means for, detecting changes in network load, transmitting a QoS range renegotiation request to the co-design interface server based on the changes in the network load, and re-negotiating the set of QoS requirement alternatives for the at least one wireless link with the co-design interface server and the set of time varying preference metrics corresponding to the QoS requirement alternatives with the co-design interface server in response to the QoS range renegotiation request.

Some example embodiments provide that the RAN node further includes means for, determining updated wireless link utility information for the at least one wireless link to be assigned to the at least one task to be performed by the at least one wirelessly controlled device, transmitting the updated wireless link utility information to the co-design interface server, obtaining an updated QoS value for the at least one wireless link, the updated QoS value establishing updated QoS requirements over a second time period for the at least one wireless link, determining updated scheduling metrics for the at least one task based on the updated QoS value, and providing updated network resources over the second time period to the at least one wirelessly controlled device based on the updated scheduling metrics.

Some example embodiments provide that the RAN node further includes means for, receiving a QoS update request from the co-design interface server, and determining the updated wireless link utility information for the at least one wireless link to be assigned to the at least one task to be performed by the at least one wirelessly controlled device in response to the QoS update request.

Some example embodiments provide that the RAN node further includes means for, detecting changes in network load, transmit a QoS update request to the co-design interface server in response to the detected changes in the network load, and determining the updated wireless link utility information for the at least one wireless link to be assigned to the at least one task to be performed by the at least one wirelessly controlled device in response to the QoS update request.

## BRIEF DESCRIPTION OF THE DRAWINGS

The accompanying drawings, which are incorporated in and constitute a part of the specification, illustrate one or more example embodiments and, together with the description, explain these example embodiments. In the drawings:

FIG. 1 illustrates an example wireless communication system according to at least one example embodiment;
FIG. 2 illustrates a block diagram of an example network device according to at least one example embodiment;
FIG. 3 illustrates a block diagram of an example wirelessly controlled device according to at least one example embodiment;
FIG. 4 illustrates a chart of an example time-varying utility of an AGV as a function of its position over time and a chart of an example of scheduling weights of the AGV varying over time according to some example embodiments; and
FIGS. 5A to 5C illustrate example transmission flow diagrams according to some example embodiments.

## DETAILED DESCRIPTION

Various example embodiments will now be described more fully with reference to the accompanying drawings in which some example embodiments are shown.

Detailed example embodiments are disclosed herein. However, specific structural and functional details disclosed herein are merely representative for purposes of describing the example embodiments. The example embodiments may, however, be embodied in many alternate forms and should not be construed as limited to only the example embodiments set forth herein.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the example embodiments. As used herein, the term "and/or," includes any and all combinations of one or more of the associated listed items.

It will be understood that when an element is referred to as being "connected," or "coupled," to another element, it can be directly connected or coupled to the other element or intervening elements may be present. In contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting of the example embodiments. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Specific details are provided in the following description to provide a thorough understanding of the example embodiments. However, it will be understood by one of ordinary skill in the art that example embodiments may be practiced without these specific details. For example, systems may be shown in block diagrams in order not to obscure the example embodiments in unnecessary detail. In other instances, well-known processes, structures and techniques may be shown without unnecessary detail in order to avoid obscuring example embodiments.

Also, it is noted that example embodiments may be described as a process depicted as a flowchart, a flow diagram, a data flow diagram, a structure diagram, or a block diagram. Although a flowchart may describe the operations as a sequential process, many of the operations may be performed in parallel, concurrently or simultaneously. In addition, the order of the operations may be re-arranged. A process may be terminated when its operations are completed, but may also have additional steps not included in the figure. A process may correspond to a method, a function, a procedure, a subroutine, a subprogram, etc. When a process corresponds to a function, its termination may correspond to a return of the function to the calling function or the main function.

Moreover, as disclosed herein, the term "memory" may represent one or more devices for storing data, including random access memory (RAM), magnetic RAM, core memory, and/or other machine readable mediums for storing information. The term "storage medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "computer-readable medium" may include, but is not limited to, portable or fixed storage devices, optical storage devices, wireless channels, and various other mediums capable of storing, containing or carrying instruction(s) and/or data.

Furthermore, example embodiments may be implemented by hardware circuitry and/or software, firmware, middleware, microcode, hardware description languages, etc., in combination with hardware (e.g., software executed by hardware, etc.). When implemented in software, firmware, middleware or microcode, the program code or code segments to perform the desired tasks may be stored in a machine or computer readable medium such as a non-transitory computer storage medium, and loaded onto one or more processors to perform the desired tasks.

A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

As used in this application, the term "circuitry" and/or "hardware circuitry" may refer to one or more or all of the following: (a) hardware-only circuit implementation (such as implementations in only analog and/or digital circuitry); (b) combinations of hardware circuits and software, such as (as applicable): (i) a combination of analog and/or digital hardware circuit(s) with software/firmware, and (ii) any portions of hardware processor(s) with software (including digital signal processor(s)), software, and memory(ies) that work together to cause an apparatus, such as a mobile phone or server, to perform various functions); and (c) hardware circuit(s) and/or processor(s), such as microprocessor(s) or a portion of a microprocessor(s), that requires software (e.g., firmware) for operation, but the software may not be present when it is not needed for operation. For example, the circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

While the various example embodiments of the present disclosure are discussed in connection with the 5G wireless communication standard for the sake of clarity and convenience, the example embodiments are not limited thereto, and one of ordinary skill in the art would recognize the example embodiments may be applicable to other wireless communication standards, such as the 4G standard, a Wi-Fi standard, a future 6G standard, a future 7G standard, etc.

Various example embodiments are directed towards a co-design interface for a cloud control system, a cloud controller for controlling at least one device over a network, a cloud control system including the co-design interface, the cloud controller and a communications scheduler, and/or a method of operating the co-design interface/cloud controller/communications scheduler/-wirelessly controlled device, etc. A cloud control system refers to a control system for a wirelessly controlled device (WCD), such as a robot, an AGV, a UAV, etc., where the controller of the WCD is located on a network (e.g., a cloud network, etc.), such as at an edge node of the network, and transmits instructions to the WCD and/or receives feedback data from the WCD (e.g., sensor data, etc.) over the network. In contrast to direct control systems where the controller is "onboard" the controlled device, physically connected to the controlled device, and/or within direct communication range of the controlled device, the WCD is controlled by a controller that is connected to the WCD over at least one network. Because the controller is transmitting and/or receiving data to/from the WCD over a network, the quality of service (QoS) requirements, such as latency, reliability, survival time, and service availability, for the data communications must be high. For example, in industrial automation use cases, the communication service availability requirement may be $10^{-5}$ to $10^{-9}$ over a time budget of 0.5ms to 2ms, or in other words, the ratio of the amount of time where the task and/or service is unavailable over the amount of time where the task and/or service is operating, etc. Additionally, some applications, such as motion control require deterministic availability of communication services as high as nine nines figure, e.g., $10^{-9}$, for periodic traffic patterns.

However, high QoS requirements may cause extremely high resource strains on wireless communications systems. While there have been efforts to improve the quality of experience of end user applications, e.g., WCDs, etc., by detecting network impairments and/or performance degradation on the end user's side and adapting their network traffic streams in response to the network limitations (e.g., reducing the frame rate and/or video resolution of video streams transmitted by the end user application, etc.), these solutions are not ideal because they are reactive not proactive, and only adapt after a degradation of performance has been observed. For some cloud control systems, such as industrial wireless control, autonomous vehicle guidance, etc., such reactive corrective measures may be insufficient and may lead to increased performance disfunctions, security concerns, and/or safety threats, such as an autonomous vehicle crashing, an industrial robot harming a human operator, etc., due to lack of control from the cloud controller.

Accordingly, an approach is desired to provide a co-design interface between remotely controlled applications, e.g., WCDs, etc., and the network which enables for improved and/or optimized network procedures, such as improved QoS selection and/or scheduling, based on the current application goals of the WCD. The current application goals of the WCD may be tracked using utility functions corresponding to the time-variant and/or dynamic changes in the requirements and/or objectives of the WCD, and therefore the network parameters for enabling the completion of the application goals and/or objectives may be dynamically adjusted and/or adjusted in real-time in consideration with both the current state of the task being performed and the network status.

For example, not every task a WCD performs will require $10^{-9}$ availability and/or a WCD may not desire and/or require $10^{-9}$ availability for the entirety of the task being performed. Instead, the WCD may only require high availability and/or high network bandwidth, etc., for a specific time period corresponding to the performance of a specific portion of the task, such as controlling the motion of an AGV while the AGV is navigating a turn, etc., while desiring and/or requiring a lesser amount of network resources and/or network priority for a different portion of the task, such as controlling the motion of the AGV while the AGV is traveling straight at a constant speed, etc. Moreover, in situations where multiple WCDs may be performing in concert to accomplish a task, e.g., a plurality of robots performing different tasks on an assembly line, etc., the different robots may have different levels of importance and/or priority which may vary over time, and there may be inter-dependence relationships between each of the robots and/or between the tasks being performed by each of the robots. Consequently, there is a desire and/or need for a co-design interface which jointly processes the time-variant utility of control tasks (e.g., tasks performed by the WCD) and the time-variant network state to determine improved and/or optimal actions to perform on the WCD-side and the network side, such as determining improved and/or optimal QoS selection and/or assurance, scheduling weighting, network resource allocation, etc.

While the example embodiments are discussed in connection with an autonomous ground vehicle, the example embodiments are not limited thereto, and for example, one or more aspects of the example embodiments may be applied to controlling robot movement and/or robot traffic in a warehouse facility, controlling actuators and/or other mechanically operated devices, controlling sensors and/or security devices, UAVs, etc.

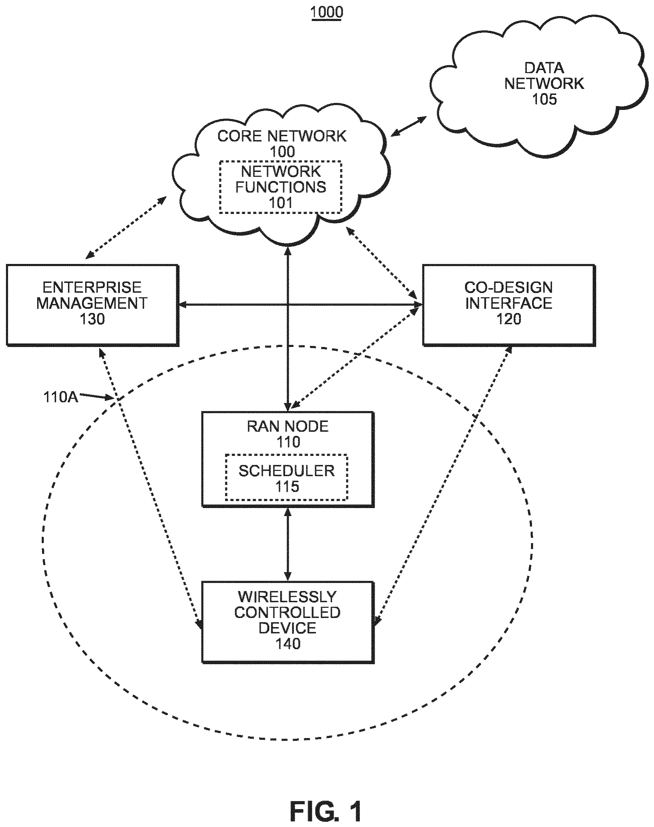

FIG. 1 illustrates an example wireless communication system according to at least one example embodiment.

As shown in FIG. 1, a wireless communication system 1000 includes a core network 100, a Data Network 105, a radio access network (RAN) node 110, a co-design interface network node 120, an enterprise management server 130, and/or a wirelessly controlled device (e.g., WCD, a user equipment (UE) device, or UE, etc.) 140, etc., but the example embodiments are not limited thereto, and for example, may include a greater or lesser number of constituent elements. For example, the wireless communication system may include two or more RAN nodes, two or more WCDs, additional base stations, servers, routers, access points, gateways, etc.

The RAN node 110 and the WCD 130 may be connected over at least one wireless network, such as a cellular wireless access network (e.g., a 3G wireless access network, a 4G-Long Term Evolution (LTE) network, a 5G-New Radio (e.g., 5G) wireless network, a 6G wireless network, a WiFi network, etc.). The wireless network may include a core network 100 and/or a Data Network 105. The RAN node 110 may connect to other RAN nodes (not shown), as well as to the core network 100 and/or the Data Network 105, over a wired and/or wireless network. The core network 100 and the Data Network 105 may connect to each other over a wired and/or wireless network. The Data Network 105 may refer to the Internet, an intranet, a wide area network, etc.

According to some example embodiments, the RAN node 110 may act as a relay node (e.g., an integrated access and backhaul (IAB) node) and may communicate with the WCD 130, etc., in combination with at least one base station (and/or access point (AP), router, etc.) (not shown) of the same or a different radio access technology (e.g., WiFi, etc.). According to other example embodiments, the wireless communication system 1000 may further include at least one co-design interface node 120, and the co-design interface node 120 may act as an intermediary and/or mediating entity between the scheduler 115 and the enterprise management server 130. According to some example embodiments, the enterprise management server 130 may be a controller, the cloud controller, etc., of the WCD 140, and in example embodiments where there are a plurality of WCDs 140, a single enterprise management server 130 may control two or more WCDs 140, all of the WCDs 140, etc., and/or the control of the plurality of WCDs 140 may be split among a plurality of enterprise management servers 130, but the example embodiments are not limited thereto. Additionally, in one or more example embodiments, the enterprise management server 130 and/or scheduler 115 may be installed on, located with, executed by, etc., the co-design interface node 120, but the example embodiments are not limited thereto.

The WCD 130 may be wirelessly controlled devices, such as, but not limited to, Internet of Things (IoT) devices, sensors (e.g., thermometers, humidity sensors, pressure sensors, motion sensors, accelerometers, etc.), actuators, robotic devices, robotics, drones, connected medical devices, eHealth devices, smart city related devices, a security camera, autonomous devices (e.g., autonomous cars, etc.), and/or any other type of stationary or portable device capable of operating according to, for example, the 5G NR communication standard, and/or other wireless communication standard(s). Additionally, in some example embodiments, the wireless network 1000 may further include additional UE devices, such as a smartphone, a tablet, a desktop computer, a laptop computer, a wearable device, etc., but the example embodiments are not limited thereto. The WCD 130 may be configurable to transmit and/or receive data in accordance to strict latency, reliability, and/or accuracy requirements, such as URLLC communications, TSC communications, etc., but is not limited thereto.

The wireless communication system further includes a plurality of transmission/reception points (TRPs) (e.g., a base station, a wireless access point, etc.), such as RAN node 110, etc. The RAN node 110 may operate according to an underlying cellular and/or wireless radio access technology (RAT), such as 5G NR, LTE, Wi-Fi, etc. For example, the RAN node 110 may be a 5G gNB node, a LTE eNB node, or a LTE ng-eNB node, etc., but the example embodiments are not limited thereto. The RAN node 110 may provide wireless network services to one or more WCDs devices within one or more cells (e.g., cell service areas, broadcast areas, serving areas, coverage areas, etc.) surrounding the respective physical location of the RAN node. As shown in FIG. 1, the RAN node 110 may provide a single cell 110A, but is not limited thereto.

Additionally, the RAN node 110 may be configured to operate in a multi-user (MU) multiple input multiple out (MIMO) mode and/or a massive MIMO (mMIMO) mode, wherein the RAN node 110 transmits a plurality of beams (e.g., radio channels, datastreams, streams, etc.) in different spatial domains and/or frequency domains using a plurality of antennas (e.g., antenna panels, antenna elements, an antenna array, etc.) and beamforming and/or beamsteering techniques. For example, RAN node 110 may transmit and/or receive transmissions using two or more beams, but the example embodiments are not limited thereto, and for example, the RAN node may transmit using a greater or lesser number of beams, etc.

Additionally, WCD 130 may be located within the cell service area 110A, and may connect to, receive broadcast messages from, receive paging messages from, receive/transmit signaling messages from/to, and/or access the wireless network through, etc., from the RAN node 110. However, the example embodiments are not limited thereto, and for example, one or more of the WCDs may connect to two or more RAN nodes and may perform carrier aggregation using one or more component carriers (CCs) from one or more of the RAN nodes, etc.

According to at least one example embodiment, the WCD 130 may include multiple antenna panels (e.g., may be a multi-panel UE device, etc.), and may transmit and/or receive to a plurality of RAN nodes (e.g., TRPs), etc., using the same time-frequency resources and/or using resources overlapping in time, but the example embodiments are not limited thereto.

According to at least one example embodiment, the RAN node 110 may be connected to at least one core network element (not shown) residing on the core network 100, such as a core network device, a core network server, access points, switches, routers, nodes, etc., but the example embodiments are not limited thereto. The core network 100 may provide network functions 101, such as an access and mobility management function (AMF), a session management function (SMF), a policy control function (PCF), a unified data management (UDM), a user plane function (UPF), an authentication server function (AUSF), an application function (AF), and/or a network slice selection function (NSSF), etc., and/or equivalent functions, but the example embodiments are not limited thereto.

According to some example embodiments, the RAN node 110 may further include a scheduler 115, but the example embodiments are not limited thereto. The scheduler 115 (e.g., a communications scheduler, a radio resource management (RRM) scheduler, a radio resource control (RRC) scheduler, a media access control (MAC) scheduler, etc.) may communicate with a cloud controller and/or enterprise management server 130 for the WCD 130, etc. According to some example embodiments, the wireless communication system 1000 may include a plurality of RAN nodes 110 and a plurality of schedulers 115 corresponding to and/or associated each of the RAN nodes 110, etc. For example, the plurality of RAN nodes 110 may use different radio access technologies (RAT), e.g., 5G NR, 4G, 6G, WiFi, etc., and a separate scheduler 115 may perform scheduling operations and/or functionalities for each of the different RATs, and/or one or more RAN nodes 110 may be located in different geographic locations, may provide different cell service areas, and/or may support a different set of WCDs 130, etc., and the individual schedulers 115 may perform scheduling operations for the WCDs 130, etc., connected to each individual RAN node 110, etc.

According to some example embodiments, the enterprise management server 130 (e.g., enterprise management node, enterprise management network node, etc.) may be located in the core network 100, e.g., may reside on a core network element, an edge network node, a core network device, etc., but the example embodiments are not limited thereto. Additionally, in other example embodiments, the enterprise management server 130 may be executed on a UE device (not shown) and may communicate with and/or interface with the scheduler 115 via a co-design interface node 120 (e.g., a mediating network node, a mediating network entity, etc.), and the mediating network node may be a second RAN node, a TRP, a server, a computing device, a UE device, etc., but the example embodiments are not limited thereto. Further, in some example embodiments, the enterprise management server 130 may be co-located with the scheduler 115 on the RAN node 110, etc.

The scheduler 115, the enterprise management server 130, and/or the WCD 140 may exchange information over a desired control communication interface, e.g., the co-design interface node 120, in a static and/or dynamic manner, wherein the scheduler 115 may assign network resources for one or more control tasks (e.g., control operations, control assignments, etc.) for the WCD 140 based on data provided by the enterprise management server 130 and/or user application of the WCD 140, etc. According to some example embodiments, the scheduler 115, the co-design interface node 120, and the WCD 140 may perform an initial handshaking operation to establish radio link(s), and an initial exchange of setup parameters, etc., may be performed between the user application of the WCD 140, the enterprise management server 130, and the co-design interface node 120, but is not limited thereto.

For example, assuming that there are a plurality of WCD 140s, and each of the WCDs includes a user application for performing a task which is interdependent upon the performance of the other WCD tasks, each of the WCD 140s may transmit task utility information related to their respective tasks to be performed, such as one estimated total operation time of the task, estimated time to completion of the task, an estimated sampling time of the task, an estimated survival time of the task, an operation status of the task, at least one sensor value associated with the task, etc., but is not limited thereto. Each of the task utility information parameters may vary over time, but is not limited thereto.

Further, the user application of the WCD 140 may also evaluate and/or continuously evaluate (e.g., evaluate in real-time, etc.) the tolerable QoS range for the execution of their respective current task based on their own data (e.g., data gathered using the WCD's local sensors, etc.) and/or based on data and/or instructions received from the enterprise management server 130. The enterprise management server 130 may evaluate and/or continually evaluate the task utility information parameters received from each of the plurality of WCDs, and may determine operation parameter ranges for each of the WCDs based on the totality of information received from the plurality of WCDs.

More specifically, the enterprise management server 130 may determine and/or compute the global control utility function $O(t)$, e.g., a time-varying task utility function, for all of the tasks being performed by the plurality of WCDs based on, for example, the importance, priority, and/or criticality of the individual tasks being executed by the WCDs, the time and/or energy consumed for each task, the interdependence of the tasks (e.g., task 1 and task 2 may require the same level of QoS, but because task 2 is dependent upon the completion of task 1, task 1 is assigned precedence over task 2, etc.), but the example embodiments are not limited thereto. The enterprise management server 130 may transmit the task utility function $O(t)$ to the co-design interface node 120 and/or the respective WCD 130, etc. For the WCD 130, according to at least one example embodiment, the WCD 130 may update, adjust, and/or modify its respective tolerable QoS range based on the received input from the enterprise management server 130, and may report the updated tolerable QoS range information to the enterprise management server 130 and/or the co-design interface 120.

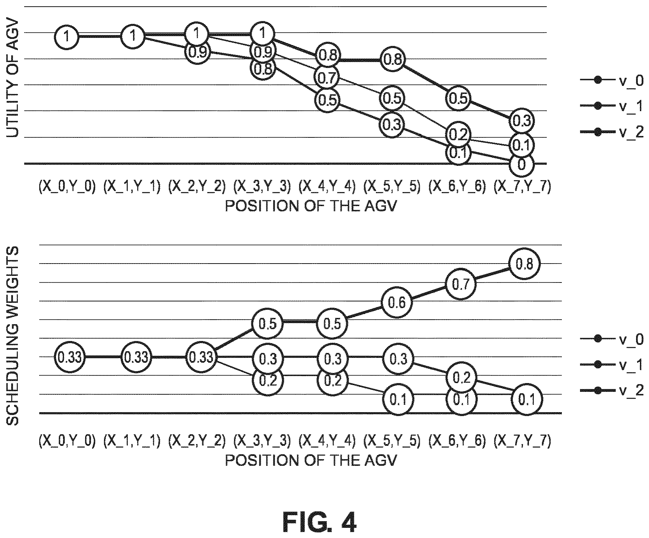

Concurrently, the scheduler 115 may transmit wireless link utility information (e.g., network utility information) $U(t)$ for each wireless link available to the WCD 130 to the co-design interface node 120, such as available network resource information, channel status information, network load information, estimated future network load information, etc., but is not limited thereto. The co-design interface 120 may then compute and/or determine a time-varying QoS time function $QoS(t)$ based on the task utility information $O(t)$ and the network utility information $U(t)$ for each user application of the plurality of WCD 130. For example, the co-design interface node 120 may determine the QoS time function $QoS(t)$ by determining acceptable QoS ranges for the task and/or application based on traffic priority metrics for radio scheduling for each application based on data traffic flow to/from the application, such as consecutive packets generated by and/or arriving at the application, etc. For example, the co-design interface 120 may determine and/or select a time-varying QoS (e.g., a first QoS for a first time period for the WCD 130 over a desired radio link, a second QoS for a second time period for the WCD 130 over the desired radio link, etc.) for a task to be executed by the WCD 140 based on a look-up table stored on the co-design interface 120 which maps the traffic priority metric with a QoS assignment for the wireless link assigned to the WCD 140 for completion of the desired task. The co-design interface 120 may transmit the assigned QoS time function $QoS(t)$ to the scheduler 115 to implement in its radio link scheduling with the WCD 140, and may also transmit the QoS time function $QoS(t)$ to the WCD 140 so that the user application may adjust its operational and/or control parameters based on the expected radio link scheduling with the RAN node 110. However, the example embodiments are not limited thereto, and the determination of the task utility information $O(t)$, the network utility information $U(t)$, the QoS time function $QoS(t)$, etc., will be discussed in greater detail in connection with FIGS. 4 to 5C.

Additionally, the co-design interface 120 may also transmit task utility recommendations to the enterprise management server 130 and/or the WCD 140. For example, the co-design interface 120 may determine recommendations and/or suggestions regarding the priority of a certain task utility, the sequence for performing a plurality of tasks, the amount of resources to assign to the task, etc., for implementation by the enterprise management server 130 and/or the WCD 140. However, the example embodiments are not limited thereto.

While certain components of a wireless communication network are shown as part of the wireless communication system of FIG. 1, the example embodiments are not limited thereto, and the wireless communication network may include components other than that shown in FIG. 1, which are desired, necessary, and/or beneficial for operation of the underlying networks within the wireless communication system, such as access points, switches, routers, nodes, servers, gateways, etc.

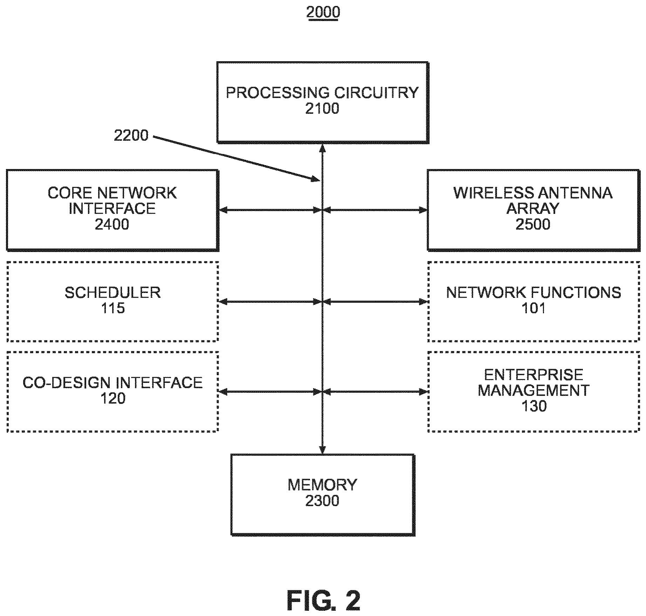

FIG. 2 illustrates a block diagram of an example network device and/or network node according to at least one example embodiment. The network device of FIG. 2 may correspond to the RAN node 110 including the scheduler 115, a network device including the enterprise management server 130, and/or a network device corresponding to the co-design interface node 120 of FIG. 1, but the example embodiments are not limited thereto.

Referring to FIG. 2, a network device 2000 (e.g., a network node, etc.) may include processing circuitry, such as processing circuitry 2100, at least one communication bus 2200, a memory 2300, at least one core network interface 2400 (e.g., a private network interface, etc.), at least one wireless antenna array 2500, etc., but the example embodiments are not limited thereto. For example, the core network interface 2400 and the wireless antenna array 2500 may be combined into a single network interface, etc., or the network device 2000 may include a plurality of wireless antenna arrays, a plurality of core network interfaces, etc., and/or any combinations thereof. Additionally, the network device 2000 may further include a scheduler 115 and/or an enterprise management server 130 (e.g., wireless controller, etc.), but is not limited thereto. The memory 2300 may include various special purpose program code including computer executable instructions for performing the operations of FIGS. 4 to 5C, etc., which may cause the network device 2000 to perform the one or more of the methods of the example embodiments, but the example embodiments are not limited thereto.

In at least one example embodiment, the processing circuitry 2100 may include at least one processor (and/or processor cores, distributed processors, networked processors, application processors, etc.), which may be configured to control one or more elements of the network device 2000, and thereby cause the network device 2000 to perform various operations. The processing circuitry 2100 is configured to execute processes by retrieving program code (e.g., computer readable instructions) and data from the memory 2300 to process them, thereby executing special purpose control and functions of the entire network device 2000. Once the special purpose program instructions are loaded into the processing circuitry 2100, the processing circuitry 2100 executes the special purpose program instructions, thereby transforming the processing circuitry 2100 into a special purpose processor. According to some example embodiments, the processing circuitry 2100 may include a specially programmed FPGA, a special purpose system-on-chip (SoC), a special purpose ASIC, etc., which is specifically provided to perform the functionality related to the methods of FIGS. 4 to 5C, etc., but the example embodiments are not limited thereto.

In at least one example embodiment, the memory 2300 may be a non-transitory computer-readable storage medium and may include a random access memory (RAM), a read only memory (ROM), and/or a permanent mass storage device such as a disk drive, or a solid state drive. Stored in the memory 2300 is program code (i.e., computer readable instructions) related to operating the network device 2000, such as the methods discussed in connection with FIGS. 4 to 5C, the at least one core network interface 2400, the at least one wireless antenna array 2500, the scheduler 115, the interface 120, and/or the enterprise management server 130, etc. Such software elements may be loaded from a non-transitory computer-readable storage medium independent of the memory 2300, using a drive mechanism (not shown) connected to the network device 2000, or via the at least one core network interface 2400, and/or at least one wireless antenna array 2500, etc.

In at least one example embodiment, the communication bus 2200 may enable communication and data transmission to be performed between elements of the network device 2000. The bus 2200 may be implemented using a high-speed serial bus, a parallel bus, and/or any other appropriate communication technology. According to at least one example embodiment, the network device 2000 may include a plurality of communication buses (not shown), such as an address bus, a data bus, etc.

Additionally, according to some example embodiments, the network device 2000 may also operate as a RAN node, for example, a 4G RAN node, a 5G RAN node, etc., for any UE devices and/or WCDs within wireless range of the network node, but the example embodiments are not limited thereto. Moreover, the network device 2000 may operate as a co-design interface node 120, a mediating network node, a mediating network entity, etc., for at least one RAN node and/or the core network 100, but the example embodiments are not limited thereto.

The network device 2000 may also include at least one core network interface 2400, and/or at least one wireless antenna array 2500, etc. The at least one wireless antenna array 2500 may include an associated array of radio units (not shown) and may be used to transmit the wireless signals in accordance with a radio access technology, such as 4G LTE wireless signals, 5G NR wireless signals, RFID wireless signals, Bluetooth wireless signals, WiFi wireless signals, etc., to at least one WCD and/or UE device, such as WCD 130, etc. According to some example embodiments, the wireless antenna array 2500 may be a single antenna, or may be a plurality of antennas, etc. For example, the wireless antenna array 2500 may be configured as a grid of beams (GoB) which transmits a plurality of beams in different directions, angles, frequencies, and/or with different delays, etc., but the example embodiments are not limited thereto.

The network device 2000 may communicate with a core network (e.g., a backend network, backhaul network, backbone network, a private network, a local area network (LAN), a WAN, Data Network, etc.) via the core network interface 2400. The core network interface 2400 may be a wired and/or wireless network interface and may enable the network device 2000 to communicate and/or transmit data to and/or from network devices on the backend network, such as neighboring network devices and/or network nodes (not shown), a core network gateway (not shown), a Data Network, such as the Internet, intranets, WANs, LANs, etc.

While FIG. 2 depicts an example embodiment of a network device 2000, the network devices are not limited thereto, and may include additional and/or alternative architectures that may be suitable for the purposes demonstrated.

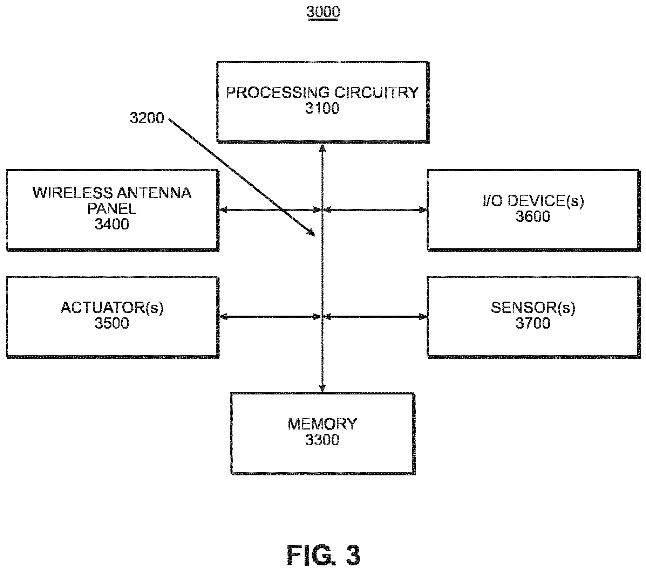

FIG. 3 illustrates a block diagram of an example wirelessly controlled device according to at least one example embodiment. The example WCD 3000 of FIG. 3 may correspond to the WCD 130 of FIG. 1, but the example embodiments are not limited thereto, and the WCD may employ alternative architectures, etc.

Referring to FIG. 3, a WCD 3000 (e.g., a robot, an industrial sensor, an AGV, a UAV, etc.) may include processing circuitry 3100, at least one communication bus 3200, a memory 3300, a plurality of wireless antennas and/or wireless antenna panels 3400, at least one actuator 3500, at least one input/output (I/O) device 3600 (e.g., a touchscreen, a microphone, a camera, a keyboard, a mouse, a camera, a speaker, etc.), and/or at least one sensor 3700 (proximity sensors (e.g., an infrared proximity sensor, a radar sensor, a LIDAR sensor, etc.), thermometers, humidity sensors, pressure sensors, motion sensors, accelerometers, computer vision cameras, etc.), but the example embodiments are not limited thereto. According to some example embodiments, the WCD 3000 may include a greater or lesser number of constituent components, and for example, the WCD 3000 may also include at least one battery (not shown), a display panel, geo-location sensor (e.g., GPS, etc.), but the example embodiments are not limited thereto. Additionally, actuator 3500, the I/O device 3600, sensor 3700, etc., of the WCD 3000 may be optional.

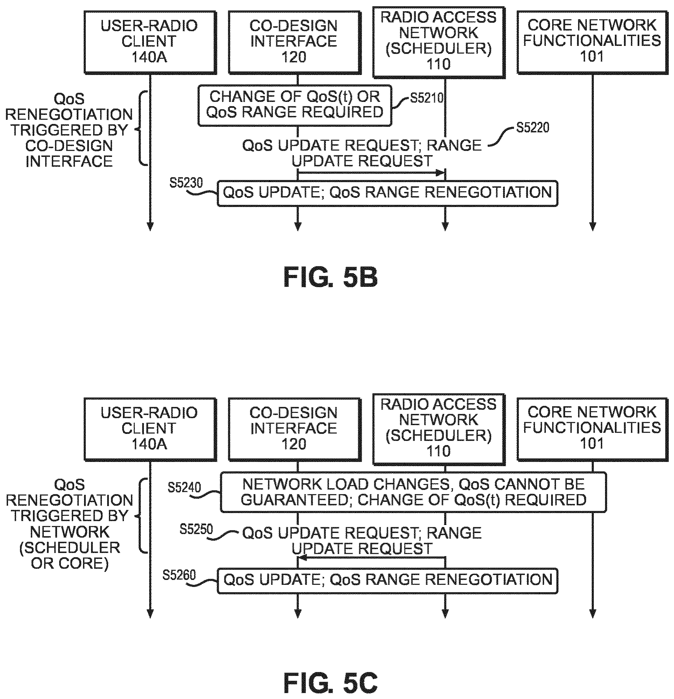

In at least one example embodiment, the processing circuitry 3100 may include at least one processor (and/or processor cores, distributed processors, networked processors, etc.), which may be configured to control one or more elements of the WCD 3000, and thereby cause the WCD 3000 to perform various operations associated with a user application (e.g., user application 140B of FIGS. 5B and 5C, etc.), such as operations related to wireless driving of a ground vehicle, wireless flying of an aerial vehicle, control of a robot, etc. The processing circuitry 3100 is configured to execute processes by retrieving program code (e.g., computer readable instructions) and data from the memory 3300 to process them, thereby executing special purpose control and functions of the entire WCD 3000. Once the special purpose program instructions are loaded into the processing circuitry 3100, the processing circuitry 3100 executes the special purpose program instructions, thereby transforming the processing circuitry 3100 into a special purpose processor. According to some example embodiments, the processing circuitry 3100 may include a specially programmed FPGA, a special purpose SoC, a special purpose ASIC, etc., which is specifically provided to perform the functionality related to the wireless control of the WCD, etc., but the example embodiments are not limited thereto. The special purpose FPGA/SoC/ASIC, etc., may be separate from the processing circuitry 3100 and/or may be added to the WCD 3000 post-purchase, e.g., as an add-on component, executed using special purpose software installed on a user's smartphone, etc.

In at least one example embodiment, the memory 3300 may be a non-transitory computer-readable storage medium and may include a random access memory (RAM), a read only memory (ROM), and/or a permanent mass storage device such as a disk drive, or a solid state drive. Stored in the memory 3300 is program code (i.e., computer readable instructions) related to operating the WCD 3000, such as the user application of the operation of the WCD 3000 and/or the methods discussed in connection with FIGS. 4 to 5C, etc. Such software elements may be loaded from a non-transitory computer-readable storage medium independent of the memory 3300, using a drive mechanism (not shown) connected to the WCD 3000, or via the plurality of wireless antennas 3400, etc.

In at least one example embodiment, the at least one communication bus 3200 may enable communication and data transmission/reception to be performed between elements of the WCD 3000, and/or monitor the status of the elements of the WCD 3000, etc. The bus 3200 may be implemented using a high-speed serial bus, a parallel bus, and/or any other appropriate communication technology. According to at least one example embodiment, the WCD 3000 may include a plurality of communication buses (not shown), such as an address bus, a data bus, etc.

The WCD 3000 may also include a plurality of wireless antenna panels 3400, but is not limited thereto. The plurality of wireless antenna panels 3400 may include a plurality of associated radio units, etc., and may be used to transmit wireless signals in accordance with at least one desired radio access technology, such as 4G LTE, 5G NR, Wi-Fi, Bluetooth, RFID, etc. According to some example embodiments, the WCD 3000 may transmit collected sensor data of the WCD 3000 to the enterprise management server 130, such as current speed, current acceleration, current direction heading, current position, current occupancy level, desired destination, current fuel level, current temperature, requests for access, etc.) at a desired time frequency (e.g., sampling time), a desired distance traveled, etc., but is not limited thereto.

Additionally, the plurality of wireless antenna panels 3400 may be configured to transmit and/or receive data communications to one or more RAN nodes (not shown), but the example embodiments are not limited thereto. The plurality of wireless antenna panels 3400 may be located at the same or different physical locations on the body of the WCD 3000, may have the same or different orientations, may operate in the same or different frequency ranges, may operate in accordance with the same or different radio access technology, etc. According to some example embodiments, the plurality of wireless antenna panels 3400 may be a single antenna, or may be a plurality of antennas, etc.

While FIG. 3 depicts an example embodiment of a WCD 3000, the WCD is not limited thereto, and they may include additional and/or alternative architectures that may be suitable for the purposes demonstrated.

FIG. 4 illustrates a chart of an example time-varying utility of an AGV as a function of its position over time and a chart of an example of scheduling weights of the AGV varying over time according to some example embodiments.

According to at least one example embodiment, a utility of a WCD, such as an AGV, may vary as a function of its position over time, as shown in the top graph of FIG. 4, but the example embodiments are not limited thereto. In the top graph of FIG. 4, it is assumed that there are three tasks to be completed represented by the $v\_0$, $v\_1$, and $v\_2$ lines, wherein each line represents different velocities for performing the same task with $v\_2 < v\_1 < v\_0$, with the utility values representing how close the AGV is to completing its task, e.g., the time amount of time remaining to deliver some items in a given position with a given velocity. As shown in the top graph of FIG. 4, all three tasks may have the same utility value of "1.0" at the $(X\_0, Y\_0)$ and $(X\_1, Y\_1)$ positions, but start having divergent utilities values as the AGV reaches the $(X\_7, Y\_7)$ position, but the example embodiments are not limited thereto. An enterprise management server 130 may use the time-varying utility values such as the values shown in the top graph of FIG. 4 to change the speed of an AGV as the utility provided by the AGV is degraded and/or decreased, but the example embodiments are not limited thereto.

Additionally, the bottom graph of FIG. 4 depicts the adjustment of a scheduling weight representing and/or corresponding to a traffic priority metric, (e.g., traffic metric, priority metric, preference metric, etc.) in response to the current utility value of the AGV application, such as the utility values shown in the top graph of FIG. 4, but the example embodiments are not limited thereto. For example, the scheduling weights may correspond to the same velocities $v\_0$ to $v\_2$ as the top graph, and the scheduler 115 may assign a greater scheduling weight to the velocity which is furthest from completion, but the example embodiments are not limited thereto.

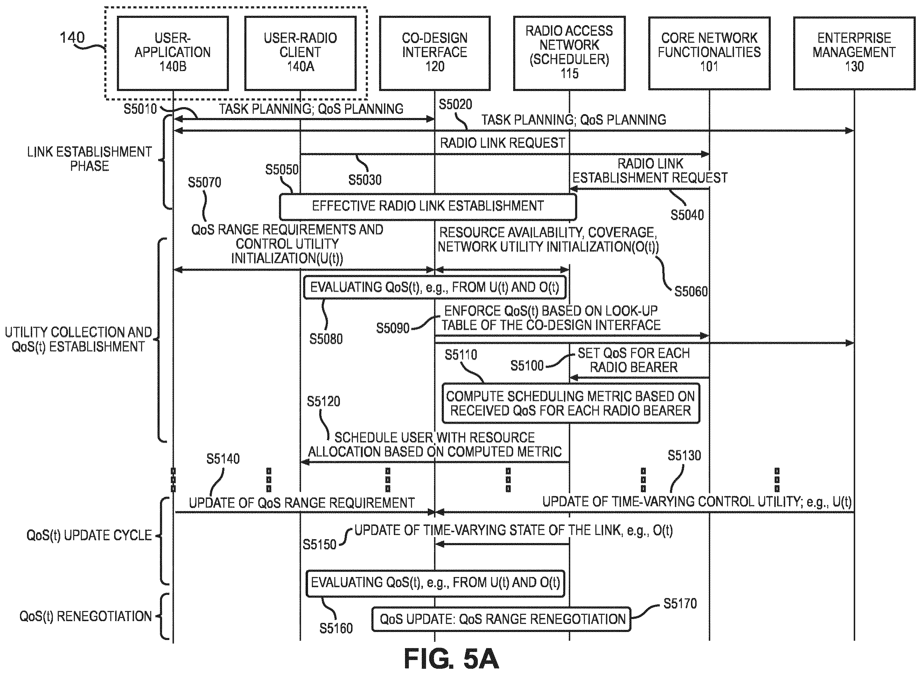

FIG. 5A illustrates a first example transmission flow diagram for QoS enforcement based on a co-design interface according to at least one example embodiment. While FIGS. 5A to 5C depict a single WCD 140, a single enterprise management server 130, and a single RAN scheduler 115, the example embodiments are not limited thereto and there may be a plurality of WCDs 140, a plurality of enterprise management servers 130, and/or a plurality of RAN schedulers 115, etc.

According to at least one example embodiment, operations S5010 to S5050 correspond to an initial link establishment phase, operations S5060 to S5120 correspond to a utility collection and QoS time function *QoS(t)* establishment phase, operations S5130 to S5160 correspond to a QoS time function *QoS(t)* update cycle, and operation S5170 corresponds to a QoS time function *QoS(t)* renegotiation phase, but the example embodiments are not limited thereto.

In operations S5010 and S5020, the link establishment phase may begin with the transmission of task planning information and/or QoS planning information between the user application 140B of the WCD 140, such as the WCD 140 of FIG. 1, the co-design interface node 120, such as the WCD co-design interface node 120 of FIG. 1, and the enterprise management server 130, etc. The task planning information may include information regarding the task(s) to be executed by the WCD 140, priority information (e.g., traffic priority information, preference metric information, etc.), task inter-dependency information, etc., but the example embodiments are not limited thereto. Additionally, the QoS planning information may include information related to network related information desired by the WCD 140, such as a QoS profile or a set of QoS alternative profiles to complete each task, etc., but is not limited thereto. In operation S5030, the WCD 140 may transmit a connection request to the core network functions 101 of the core network 100, and in operation S5040, the core network function 101 may transmit a radio link establishment request for the WCD 140 to the RAN scheduler 115. In operation S5050, a radio link may be established between the RAN 110, the co-design interface 120, and the WCD 140 based on the radio link establishment request.

In operation S5060, the co-design interface 120 may receive wireless link utility information *U(t)* from the RAN scheduler 115 regarding each wireless link available to the WCD 140 given the current state of the network, such as available network resource information, channel status information, network load information, estimated future network load information, etc., but is not limited thereto. In operation S5070, the co-design interface 120 may receive task utility information *O(t)* for each task to be executed by the WCD 140 given the current state of the user application, such as an estimated total operation time of the task, an estimated time to completion of the task, an estimated sampling time of the task, an estimated survival time of the task, an operation status of the task, at least one sensor value associated with the task from the at least wirelessly controlled device, etc., but the example embodiments are not limited thereto. In operation S5080, the co-design interface 120 may compute the time-variant priority metrics for radio scheduling based on the task utility information *O(t)* and the wireless link utility information *U(t)*. According to at least one example embodiment, the priority metric may be computed using the following equation, but the example embodiments are not limited thereto.

$$[\text{Equation 1}] \quad O(t)^{\beta} \times U(t)^{\gamma}$$

wherein *O(t)* is the task utility information over time, *U(t)* is the wireless link utility information over time, β is a task priority weight, and γ is a link priority weight.

According to some example embodiments, in operation S5080, the calculated priority metrics may be further used by the co-design interface 120 to determine a set of traffic priority metrics (e.g., preference metric, priority metrics, etc.) for each task/radio link. The traffic priority metric may be shared with the RAN scheduler 115 for use in the network scheduling (e.g., link scheduling) in addition to the implicit priorities derived through time and/or frequency domain schedulers that use the QoS (e.g., the throughput, latency, packet loss, etc.) of each radio link.

In other example embodiments, a QoS time function, *QoS(t),* may be calculated for each task/link based on the determined priority metrics for the task/link. The *QoS(t)* may establish the communication QoS requirement for the task/link over one or more periods of time, such as the reliability-latency, survival time, etc., for the link according to $Q_OS_R$ which is the reference range of tolerable and/or acceptable QoS requirements for the link and the priority metric.

In some example embodiments, a set of QoS requirement alternatives and a corresponding set of preferences, *QoS(i), $w_i(t)$* for *i* ∈ {1, ... , *n*} may be calculated by the co-design interface 120, wherein $w_i$ is the scheduling weight. According to some example embodiments, the set of QoS requirements are negotiated and agreed upon between the scheduler 115 and the user application 140B of the WCD 140 during the radio link establishment phase and the time varying preference metric (e.g., priority metric, etc.) is periodically and/or dynamically recomputed by the co-design interface 120 and exchanged with the scheduler 115, but the example embodiments are not limited thereto.

Next, in operation S5090, the co-design interface 120 may transmit the QoS time function *QoS(t)* to the core network functions 101, such as PCF, SMF, etc., and/or the enterprise management server 130 for tracking the performance of the WCD 140 user application 140B. In operation S5100, the core network functions 101 may set the radio bearer for the RAN node 110 and the co-design interface 120 based on the QoS specified in the QoS time function *QoS(t)* for the given time period. In operation S5110, the RAN scheduler 115 may compute and/or update a scheduling metric, e.g., scheduling weight, etc., based on the received QoS for each radio bearer.

In operation S5120, the RAN scheduler 115 may transmit the schedule the WCD 140 with the network resource allocation based on the computed scheduling metric.

After the expiration of a desired time period, the cloud control system may perform a QoS time function *QoS(t)* update cycle. For example, in operation S5130, the enterprise management server 130 may transmit an update of the time-varying control and/or task utility information *O(t)* to the co-design interface 120, and in operation S5140, the WCD 140 may transmit an update of the QoS range requirements based on the current status of the task to the co-design interface 120. Additionally, in operation S5150, the RAN scheduler 115 may transmit an update of the time-varying state of the radio link, e.g., the updated link utility information *U(t),* to the co-design interface 120. According to at least one example embodiment, these updates may be transmitted to the co-design interface 120 on a periodic basis, or may be triggered by a significant change in the values being observed in comparison to a desired threshold value, but the example embodiments are not limited thereto.

In operation S5160, the co-design interface 120 may recalculate and/or update the priority metric and assign a new QoS time function *QoS(t)* to each of the task/link pairs based on the updated task utility information *O(t)* and the updated link utility information *U(t),* etc. Optionally, in operation S5170, the updated *QoS(t)* may be renegotiated by the RAN scheduler 115 and the co-design interface 120, but the example embodiments are not limited thereto.

FIG. 5B illustrates a second example transmission flow diagram according to at least one example embodiment. More specifically, the second example transmission flow diagram illustrates an alternate QoS renegotiation procedure which is triggered and/or initiated by the co-design interface, but the example embodiments are not limited thereto.

According to at least one example embodiment, in operation S5210, the co-design interface 120 may determine that a change and/or update of the QoS time function *QoS(t)* and/or the QoS range is desired and/or required, for example, based on the updated utility values received from the WDC user application 140B and/or the enterprise management server 130 and/or the RAN scheduler 115 (e.g., operations S5130 to S5150 of FIG. 5A) and desired threshold values for the task utility information *O(t)* and the link utility information *U(t).* In operation S5220, the co-design interface 120 may transmit a QoS update request and/or QoS range update request to the RAN scheduler 115. In operation S5230, the RAN scheduler 115 and the co-design interface 120 may renegotiate the QoS range and/or the QoS time function *QoS(t)* for each of the task/link pairs.

FIG. 5C illustrates a third example transmission flow diagram according to at least one example embodiment. More specifically, the third example transmission flow diagram illustrates an alternate QoS renegotiation procedure which is triggered and/or initiated by the RAN scheduler, but the example embodiments are not limited thereto.

According to at least one example embodiment, in operation S5240, the status of the network may change, e.g., the network load may change, there may be a disruption of network service, etc., and the RAN scheduler 115 may determine that a change of the QoS time function *QoS(t)* is desired and/or required. In operation S5250, the RAN scheduler 115 may transmit a QoS update request and/or QoS range update request to the co-design interface 120. In operation S5260, the RAN scheduler 115 and the co-design interface 120 may renegotiate the QoS time function *QoS(t)* and/or the QoS range based on the updated and/or current status of the network, etc.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

**Claims**

1. A network device (120), comprising means for:

   obtaining task utility information for at least one task to be performed by at least one wirelessly controlled device (140),
   obtaining wireless link utility information for at least one wireless link to be assigned to the at least one task,
   determining a quality of service (QoS) time function for the at least one task and the at least one wireless link based on the task utility information and the wireless link utility information, the QoS time function establishing QoS requirements over a first time period for the at least one task and the at least one wireless link, and
   communicating the QoS time function to a network scheduler node (115), a core network node, and an enterprise management server (13), the QoS time function enabling the network scheduler node (115) to provide network resources over the first time period to the at least one wirelessly controlled device (140) based on the QoS requirements.

2. The network device (120) of claim 1, wherein, the network device (120) further includes means for, in response to the communicating the QoS time function:
   receiving QoS assignment information for the at least one wireless link from the core network node.

3. The network device (120) of any one of claims 1 to 2, wherein the task utility information includes at least one of,
   at least one estimated total operation time of the at least one task, at least one estimated time to completion of the at least one task, at least one estimated sampling time of the at least one task, at least one estimated survival time of the at least one task, at least one operation status of the at least one task, at least one sensor value associated with the at least one task from the at least wirelessly controlled device (140), or any combinations thereof;

the wireless link utility information includes at least one of,
available network resource information, channel status information, network load information, estimated future network load information, or any combinations thereof; and
the task utility information and the wireless link utility information vary over the first time period.

4. The network device (120) of any one of claims 1 to 3, wherein the means for determining the QoS time function includes means for:

negotiating a set of QoS requirement alternatives for the at least one task and the at least one wireless link with the network scheduler node (115);
negotiating a set of time varying preference metrics corresponding to the QoS requirement alternatives with the network scheduler node (115); and
determining the QoS time function based on the set of QoS requirement alternatives and the set of time varying preference metrics.

5. The network device (120) of any one of claims 1 to 4, wherein the network device (120) further includes means for:

receiving a QoS range renegotiation request from the network scheduler node (115) based on changes in network load detected by the network scheduler node (115); and
re-negotiating the set of QoS requirement alternatives for the at least one task and the at least one wireless link with the network scheduler node (115) and the set of time varying preference metrics corresponding to the QoS requirement alternatives with the network scheduler node (115) in response to the QoS range renegotiation request.

6. The network device (120) of any one of claims 1 to 5, wherein the network device (120) further includes means for:

detecting changes in the QoS requirements of the QoS time function;
transmitting a QoS range renegotiation request to the network scheduler node (115) based on the changes in the QoS requirements; and
re-negotiating the set of QoS requirement alternatives for the at least one task and the at least one wireless link with the network scheduler node (115) and the set of time varying preference metrics corresponding to the QoS requirement alternatives with the network scheduler node (115) in response to the QoS range renegotiation request.

7. The network device (120) of any one of claims 1 to 6, wherein the network device (120) further includes means for:

obtaining updated task utility information for the at least one task to be performed by the at least one wirelessly controlled device (140);
obtaining updated wireless link utility information for at least one wireless link to be assigned to the at least one task;
determining an updated QoS time function for the at least one task and the at least one wireless link based on the updated task utility information and the updated wireless link utility information, the updated QoS time function establishing updated QoS requirements over a second time period for the at least one task and the at least one wireless link; and
communicating the updated QoS time function to the network scheduler node (115), the updated QoS time function enabling the network scheduler node (115) to provide updated network resources over the second time period to the at least one wirelessly controlled device (140) based on the updated QoS requirements.

8. A radio access network (RAN) node (110), comprising means for:

determining wireless link utility information for at least one wireless link to be assigned to at least one task to be performed by at least one wirelessly controlled device (140),
transmitting the wireless link utility information to a co-design interface server (120),
obtaining a Quality of Service (QoS) value from a core network node for the at least one wireless link, the QoS value establishing QoS requirements over a first time period for the at least one wireless link,
determining scheduling metrics for the at least one wireless link based on the QoS value, and
providing network resources over the first time period to the at least one wirelessly controlled device (140) based on the scheduling metrics.

9. The RAN node (110) of claim 8, wherein the wireless link utility information includes at least one of:

available network resource information, channel status information, network load information, estimated future network load information, or any combinations thereof; and

the wireless link utility information and the scheduling metrics vary over the first time period.

10. The RAN node (110) of any one of claims 8 to 9, wherein the RAN node further includes means for:

negotiating a set of QoS requirement alternatives for the at least one wireless link with the co-design interface server (120); and
negotiating a set of time varying preference metrics corresponding to the QoS requirement alternatives with the co-design interface server (120).

11. The RAN node (110) of any one of claims 8 to 10, wherein the RAN node (110) further includes means for:

receiving a QoS range renegotiation request from the co-design interface server (120); and
re-negotiating the set of QoS requirement alternatives for the at least one wireless link with the co-design interface server (120) and the set of time varying preference metrics corresponding to the QoS requirement alternatives with the co-design interface server (120) in response to the QoS range renegotiation request.

12. The RAN node (110) of any one of claims 8 to 11, wherein the RAN node (110) further includes means for:

detecting changes in network load;
transmitting a QoS range renegotiation request to the co-design interface server (120) based on the changes in the network load; and
re-negotiating the set of QoS requirement alternatives for the at least one wireless link with the co-design interface server (120) and the set of time varying preference metrics corresponding to the QoS requirement alternatives with the co-design interface server (120) in response to the QoS range renegotiation request.

13. The RAN node (110) of any one of claims 8 to 12, wherein the RAN node (110) further includes means for:

determining updated wireless link utility information for the at least one wireless link to be assigned to the at least one task to be performed by the at least one wirelessly controlled device (140);
transmitting the updated wireless link utility information to the co-design interface server (120);
obtaining an updated QoS value for the at least one wireless link, the updated QoS value establishing updated QoS requirements over a second time period for the at least one wireless link;
determining updated scheduling metrics for the at least one task based on the updated QoS value; and
providing updated network resources over the second time period to the at least one wirelessly controlled device (140) based on the updated scheduling metrics.

14. The RAN node (110) of any one of claims 8 to 13, wherein the RAN node (110) further includes means for:

receiving a QoS update request from the co-design interface server (120); and
determining the updated wireless link utility information for the at least one wireless link to be assigned to the at least one task to be performed by the at least one wirelessly controlled device (140) in response to the QoS update request.

15. A method of operating a network device (120) comprising:

obtaining task utility information for at least one task to be performed by at least one wirelessly controlled device (140);
obtaining wireless link utility information for at least one wireless link to be assigned to the at least one task;
determining a quality of service (QoS) time function for the at least one task and the at least one wireless link based on the task utility information and the wireless link utility information, the QoS time function establishing QoS requirements over a first time period for the at least one task and the at least one wireless link; and
communicating the QoS time function to a network scheduler node (115), a core network node, and an enterprise management server (130), the QoS time function enabling the network scheduler node (115) to provide network resources over the first time period to the at least one wirelessly controlled device (140) based on the QoS requirements.

1000

**FIG. 1**

2000

PROCESSING CIRCUITRY
2100

2200

CORE NETWORK
INTERFACE
2400

WIRELESS ANTENNA
ARRAY
2500

SCHEDULER
115

NETWORK FUNCTIONS
101

CO-DESIGN INTERFACE
120

ENTERPRISE
MANAGEMENT
130

MEMORY
2300

FIG. 2

3000

PROCESSING CIRCUITRY
3100

3200

WIRELESS ANTENNA
PANEL
3400

I/O DEVICE(s)
3600

ACTUATOR(s)
3500

SENSOR(s)
3700

MEMORY
3300

FIG. 3

FIG. 4

**FIG. 5A**

| USER-RADIO CLIENT 140A | CO-DESIGN INTERFACE 120 | RADIO ACCESS NETWORK (SCHEDULER) 110 | CORE NETWORK FUNCTIONALITIES 101 |
|---|---|---|---|

QoS RENEGOTIATION TRIGGERED BY CO-DESIGN INTERFACE

CHANGE OF QoS(t) OR QoS RANGE REQUIRED —S5210

QoS UPDATE REQUEST; RANGE UPDATE REQUEST —S5220

S5230 — QoS UPDATE; QoS RANGE RENEGOTIATION

## FIG. 5B

| USER-RADIO CLIENT 140A | CO-DESIGN INTERFACE 120 | RADIO ACCESS NETWORK (SCHEDULER) 110 | CORE NETWORK FUNCTIONALITIES 101 |
|---|---|---|---|

QoS RENEGOTIATION TRIGGERED BY NETWORK (SCHEDULER OR CORE)

S5240 — NETWORK LOAD CHANGES, QoS CANNOT BE GUARANTEED; CHANGE OF QoS(t) REQUIRED

S5250 — QoS UPDATE REQUEST; RANGE UPDATE REQUEST

S5260 — QoS UPDATE; QoS RANGE RENEGOTIATION

## FIG. 5C

## EUROPEAN SEARCH REPORT

Europäisches
Patentamt
European
Patent Office
Office européen
des brevets

**Application Number**

EP 25 20 0387

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 082 891 B2 (NOKIA TECHNOLOGIES OY [FI]) 3 August 2021 (2021-08-03) | 1-3, 7-10,14, 15 | INV. H04W28/24 H04W28/02 |
| Y | * paragraph [0095] * <br> * paragraph [0097] - paragraph [0098] * <br> * paragraph [0093] * <br> * figure 3 * <br> * paragraph [0069] * <br> ----- | 4-6, 11-13 | |
| Y | US 2017/289047 A1 (SZILÁGYI PÉTER [HU] ET AL) 5 October 2017 (2017-10-05) <br> * claim 1 * <br> ----- | 4-6, 11-13 | |

TECHNICAL FIELDS
SEARCHED (IPC)

H04W
H04L

The present search report has been drawn up for all claims

| Place of search | Date of completion of the search | Examiner |
|---|---|---|
| The Hague | 25 November 2025 | Iavarone, Federico |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT
## ON EUROPEAN PATENT APPLICATION NO.

EP 25 20 0387

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2025

| Patent document cited in search report | | Publication date | Patent family member(s) | | Publication date |
|---|---|---|---|---|---|
| US 11082891 | B2 | 03-08-2021 | CN | 108886703 A | 23-11-2018 |
| | | | EP | 3440867 A1 | 13-02-2019 |
| | | | US | 2019124555 A1 | 25-04-2019 |
| | | | WO | 2017176248 A1 | 12-10-2017 |
| US 2017289047 | A1 | 05-10-2017 | NONE | | |

EPO FORM P0459

For more details about this annex : see Official Journal of the European Patent Office, No. 12/82